# EUROPÄISCHE PATENTSCHRIFT

(11) **EP 4 050 742 B1**
(45) Veröffentlichungstag und Bekanntmachung des Hinweises auf die Patenterteilung: **07.05.2025**
(21) Anmeldenummer: 21159130.0
(22) Anmeldetag: 25.02.2021
(51) Int. Cl.: H02G 3/04, H02G 3/06, A62C 2/06, A62C 3/16

(54) **INSTALLATIONSKANALSYSTEM ZUM BRANDSCHUTZ EINER ELEKTROKABELINSTALLATION**
INSTALLATION CHANNEL SYSTEM FOR PROTECTING AN ELECTRIC CABLE INSTALLATION AGAINST FIRE
SYSTÈME DE CANAUX D'INSTALLATION DESTINÉ À LA PROTECTION CONTRE L'INCENDIE D'UNE INSTALLATION DE CÂBLE ÉLECTRIQUE

(43) Veröffentlichungstag der Anmeldung: 31.08.2022
(73) Patentinhaber: G + H Isolierung GmbH, 67063 Ludwigshafen (DE)
(72) Erfinder: ADAM, Wolfram, 97241 Bergtheim (DE)
(74) Vertreter: Grünecker Patent- und Rechtsanwälte PartG mbB

(56) Entgegenhaltungen:
- EP-A1- 0 123 363
- JP-A- 2001 012 654
- US-A- 539 462
- ANONYMOUS: "Fire Protection Systems", BSS CATALOGUE 2016, 1 July 2016 (2016-07-01), Menden, Germany, pages 1 - 408, XP055538346, Retrieved from the Internet <URL:https://obo-bettermann.com/documents/Katalog_BSS_en_2016.pdf> [retrieved on 20190104]

## Beschreibung

Die Erfindung betrifft ein Installationskanalsystem zum Brandschutz einer Elektrokabelinstallation und einen Verbinder für einander benachbarte Enden von zwei Kabelkanalabschnitten des Installationskanalsystems.

Üblicherweise wird eine Elektrokabelinstallation zum Zwecke des Brandschutzes in einem Installationskanalsystem verlegt, das zwei oder noch mehr miteinander verbundene Kabelkanalabschnitte umfasst, die beispielsweise an die räumlichen Gegebenheiten eines Gebäudes angepasst werden können. Die zwei Kabelkanalabschnitte sind jeweils innenseitig mit einem aufschäumbaren Dämmschichtbildner beschichtet, der bei einer bestimmten Temperatur aufschäumt und dadurch vorhandene Anschlussstellen bzw. -fugen sowie eventuell vorhandene oder durch den Brand entstehende Ritzen und Spalten abdichtet. Zudem verhindert der aufschäumbare Dämmschichtbildner eine Weiterleitung von Feuer und Rauch der damit umhüllten Elektrokabelinstallation.

Die DE 10 2007 050639 B4 offenbart eine selbsttragende Brandschutzverkleidung aus vorgefertigten Formteilen, wobei ein formstabiler Träger aus einem Folienblech mit einer Stärke bis zwei mm vorgesehen ist, und dessen Innenseite vollflächig mit einem aufschäumbaren Dämmschichtbildner mit einer Stärke von 0,6 bis 2,5 mm beschichtet ist. Als Verbindung wird eine Steck- oder Schiebeverbindung vorgeschlagen.

Des Weiteren ist aus der DE 100 43 355 A1 ein brandgeschützter Kabelkanal und ein Verfahren zur Herstellung desselben bekannt. Der Kabelkanal ist aus einem Verbundwerkstoff gebildet, der aus einem nichtmetallischen Brandschutzmaterial besteht, das mit einer Metalleinlage verstärkt ist. Als Verbindungseinrichtung wird ein Rinnen- und ein Deckelteil vorgeschlagen, die über Kappenschlösser miteinander verbunden sind. Als Befestigung der Kabelrinne dient separat davon ein Träger, der über Gewindestangen an einer Decke befestigt werden kann oder auf einer separaten Tragkonstruktion aufgelegt werden kann.

Weitere Beispiele für bekannte brandgeschützte Kabelkanäle sind im Katalog "Fire Protection Systems", XP055538346, beschrieben.

Beispiele für die Halterung von Rohrkanälen sind in der US 539 462 A und in der EP 0 123 363 A1 beschrieben.

Nachteilig bei den bekannten Installationskanalsystemen ist, dass die Verbindung der Kabelkanalabschnitte sowohl in der Herstellung als auch beim Installationsvorgang aufwendig ist.

Aufgabe der vorliegenden Erfindung ist es daher, ein Installationskanalsystem zum Brandschutz einer Elektrokabelinstallation und einen Verbinder für einander benachbarte Enden der zwei Kabelkanalabschnitte bereitzustellen, die in der Herstellung und beim Installationsvorgang einfacher ausgestaltet sind.

Zur Lösung dieser Aufgabenstellung stellt die Erfindung einen Verbinder nach Anspruch 1 für ein Installationskanalsystem und ein Installationskanalsystem nach Anspruch 2 umfassend einen Verbinder nach Anspruch 1 bereit. Vorteilhafte Ausführungsformen sind in den abhängigen Ansprüchen 2 bis 13 genannt.

Dadurch, dass das erste Teilschalenelement und das zweite Teilschalenelement mit den seitlich abstehenden Flanschen aufeinandergelegt und in der Verbindungsposition mit den durch die Durchgangslöcher verlaufenden Halteelementen miteinander verbindbar sind, ist die Verbindung besonders einfach ausgeführt und kann so einfacher hergestellt werden. Zudem können die Halteelemente besonders kostengünstig mit einem oder mehreren Standardbauteilen ausgeführt werden, wie beispielsweise Schrauben, Muttern und dergleichen. Dadurch, dass die Durchgangslöcher des ersten Teilschalenelements als U-förmige Aussparungen ausgebildet sind, die in einer Querrichtung des ersten Teilschalenelements offen ausgebildet sind, sodass das erste Teilschalenelement bei aufeinandergelegten Flanschen entlang der Querrichtung zu der Verbindungsposition hin schiebbar ist, kann das erste Teilschalenelement mit dem zweiten Teilschalenelement zusammengebracht werden, während die Halteelemente bereits in die Durchgangslöcher des zweiten Teilschalenelements eingesetzt sind. Dadurch wird der Installationsvorgang des Verbinders vereinfacht.

Das Installationskanalsystem kann zum Verlegen der Elektrokabelinstallation in einem Gebäude und/oder außerhalb von Gebäuden ausgebildet oder einsetzbar sein. Die Elektrokabelinstallation kann ein oder mehrere Elektrokabel umfassen. Die Elektrokabel können beispielsweise zur Energieversorgung, Datenübertragung und/oder für Steuersignale vorgesehen sein.

Mit den zwei Kabelkanalabschnitten können gerade, abgewinkelte und/oder gekrümmte Kabelkanalabschnitte gemeint sind. Die zwei Kabelkanalabschnitte können einen kanal- oder schlauchartigen Hohlraum umschließen, in dem die Elektrokabelinstallation verlegbar ist. Die zwei Kabelkanalabschnitte können jeweils zwei Hälften umfassen, die miteinander verbindbar sind, beispielsweise über einen Schraub-, Klemm- oder Schnappmechanismus. Beispielsweise kann eine der Hälften ein U-förmiges Bodenteil aufweisen, das mit der anderen Hälfte als Deckel verschlossen wird.

Der aufschäumbare Dämmschichtbildner kann dazu ausgebildet sein, bei einer bestimmten Temperatur aufzuschäumen und dadurch vorhandene Anschlussstellen bzw. -fugen und/oder eventuell vorhandene oder durch den Brand entstehende Ritzen und Spalten abzudichten. Zudem bewirkt der aufschäumbaren Dämmschichtbildner eine Wärmeisolierung der damit umhüllten Elektrokabelinstallation.

Die zwei Kabelkanalabschnitte und/oder der Verbinder können Metallteile umfassen. Da sich dieses Material in fast beliebige Formen bringen lässt und nicht brennbar ist, ist es als Installationskanalsystem zum Brandschutz der Elektrokabelinstallation besonders geeignet. Mit Metallteilen können hier insbesondere Blechteile gemeint sein, die bevorzugt eine Stärke von weniger als 3 mm, insbesondere von weniger als 2 mm aufweisen.

Das erste Teilschalenelement und/oder das zweite Teilschalenelement können als Blechbiegeteile ausgebildet sein. Dadurch sind sie besonders flexibel und kostengünstig herstellbar. Mit Blechbiegeteilen können hier Metallteile mit einer maximalen Stärke von 3 mm, insbesondere 2 mm gemeint sein.

Das erste Teilschalenelement und/oder das zweite Teilschalenelement können unabhängig voneinander im Querschnitt ein Hut-Profil, ein U-Profil, ein Winkelprofil und/oder ein ebenes Profil aufweisen. Denkbar ist, dass die Enden der vorgenannten Profile die Flansche bilden. Beispielsweise kann wenigstens ein Ende der vorgenannten Profile abgekantet sein und wenigstens einen der Flansche bilden. Ebenso kann wenigstens ein Ende der vorgenannten Profile gerade in wenigsten einen der Flansche übergehen. Die Durchgangslöcher können in den Flanschen ausgebildet sein. Mit "Durchgangslöcher" können Öffnungen gemeint sein, die die Flansche vollständig in der Dicke durchlaufen. Die Durchgangslöcher können in dem zweiten Teilschalenelement als Durchgangsbohrungen oder -gewinde ausgeführt sein und/oder einen kreisförmigen Querschnitt aufweisen. Demgegenüber können die als U-förmige Aussparungen ausgebildeten Durchgangslöcher des ersten Teilschalenelements im Querschnitt von der Kreisform abweichen und/oder im Querschnitt teilweise offen ausgebildet sein.

Die Querrichtung des ersten Teilschalenelements kann parallel zu den seitlich abstehenden Flanschen des ersten Teilschalenelements verlaufen. Beispielsweise kann das erste Teilschalenelement als Blechbiegeteil ausgebildet sein, wobei wenigstens einer der seitlich abstehenden Flansche an einer Biegelinie abgekantet ist, und wobei die Querrichtung parallel zu der Biegelinie verläuft.

In der Verbindungsposition können die Flansche des ersten Teilschalenelements und des zweiten Teilschalenelements paarweise aufeinanderliegen, so dass sie miteinander flächig in Kontakt stehen. Vorzugsweise können in der Verbindungsposition die Durchgangslöcher des ersten Teilschalenelements mit den Durchgangslöchern des zweiten Teilschalenelements korrespondierend und/oder koaxial ausgerichtet sein.

Der Verbinder ist zur Befestigung an wenigstens einem Befestigungspunkt ausgebildet ist, um für die zwei Kabelkanalabschnitte nach der Verbindung des ersten Teilschalenelements mit dem zweiten Teilschalenelement eine Halterung zu bilden, insbesondere an einer Wand, einer Decke, einer Tragkonstruktion (Kabelrinne, Kabelleiter), Konsole und/oder einem Boden eines Gebäudes. Dadurch ist es möglich, die Verbinder zusätzlich als Halterung für die zwei Kabelkanalabschnitte einzusetzen und den Aufwand und die Kosten für separate Halterungen einzusparen. Die durch die Durchgangslöcher des zweiten Teilschalenelements verlaufenden Halteelemente sind dabei zur Befestigung an dem wenigstens einen Befestigungspunkt ausgebildet sind. Dadurch können die Halteelemente sowohl zur Verbindung des ersten Teilschalenelements mit dem zweiten Teilschalenelement als auch zur Halterung an dem Befestigungspunkt eingesetzt werden. Insbesondere verlaufen zur Befestigung die Halteelemente sowohl durch die Durchgangslöcher des ersten Teilschalenelements als auch des zweiten Teilschalenelements.

Denkbar ist, dass das zweite Teilschalenelement unabhängig von der Verbindung mit dem ersten Teilschalenelement über die Halteelemente an dem wenigstens einen Befestigungspunkt anbringbar ist, um bei einem Installationsvorgang eine Lagerung für die einander benachbarten Enden der zwei Kabelkanalabschnitte zu bilden. Dadurch kann das zweite Teilschalenelement zunächst als Tragschale für die zwei Kabelkanalabschnitte bei dem Installationsvorgang eingesetzt werden, so dass die Elektrokabelinstallation besonders einfach in die zwei Kabelkanalabschnitte eingelegt werden kann. Denkbar ist, dass dabei die zwei Kabelkanalabschnitte geöffnet sind. Nach dem Installationsvorgang kann dann das erste Teilschalenelement aufgrund der Ausbildung der Durchgangslöcher als U-förmige Aussparungen ohne ein Lösen der Halteelemente von dem zweiten Teilschalenelement in die Verbindungsposition eingebracht und dann mit dem zweiten Teilschalenelement verbunden werden. Dadurch ist der Installationsvorgang besonders einfach. Mit Installationsvorgang kann hier das Verlegen der zwei Kabelkanalabschnitte und/oder das Einlegen der Elektrokabelinstallation in die zwei Kabelkanalabschnitte gemeint sein.

Die Halteelemente können zur direkten Befestigung an dem wenigstens einen Befestigungspunkt ausgebildet sein. Dadurch ist das Installationskanalsystem besonders kostengünstig. Beispielsweise können die Halteelemente dazu wenigstens teilweise als Gewindestange ausgeführt sein, die in der Verbindungsposition durch die Durchgangslöcher des ersten Teilschalenelements und des zweiten Teilschalenelements verlaufen, wobei die Halteelemente an dem wenigstens einen Befestigungspunkt anbringbar sind. Beispielsweise können die Halteelemente an den Enden mit einem Schraubgewinde ausgebildet sein, das jeweils in einen Befestigungspunkt einschraubbar ist, beispielsweise mittels eines Dübels.

Alternativ oder zusätzlich kann das Installationskanalsystem einen Träger zur Befestigung an dem wenigstens einen Befestigungspunkt umfassen, wobei die Halteelemente direkt mit dem Träger verbindbar sind. Dadurch kann das Installationskanalsystem flexibler eingesetzt werden. Mit dem Träger kann hier beispielsweise ein winkelartiger Träger mit zwei Schenkel gemeint sein, wobei der eine Schenkel mit dem Befestigungspunkt und der andere Schenkel mit den Halteelementen verbindbar ist. Ebenso kann es sich um einen stangenartigen Träger handeln, der an einem Abschnitt mit dem Befestigungspunkt und an einem anderen Abschnitt mit den Halteelementen verbindbar ist.

Das erste Teilschalenelement und/oder das zweite Teilschalenelement sind mit einem aufschäumbaren Dämmschichtbildner beschichtet. Dadurch kann der Brandschutz im Bereich des Verbinders verbessert werden. Der aufschäumbare Dämmschichtbildner des ersten Teilschalenelements und/oder des zweiten Teilschalenelements kann hier in gleicher Art und Weise ausgebildet sein, wie der zuvor in Bezug auf die zwei Kabelkanalabschnitte beschriebene, aufschäumbare Dämmschichtbildner.

Die Halteelemente können jeweils eine Stange, einen Bolzen, eine Gewindestange, eine Mutter und/oder eine Schraube umfassen. Dadurch können die Halteelemente besonders einfach, insbesondere als Normteile ausgebildet sein und sind dadurch besonders kostengünstig. Beispielsweise können die Halteelemente als Stange ausgebildet sein, insbesondere als Gewindestange, die an einem Ende zur Verbindung des ersten Teilschalenelements und des zweiten Teilschalenelements und am anderen Ende zur Verbindung mit dem Befestigungspunkt ausgebildet sind. Ebenso kann es sich um Schrauben und/oder Muttern als Halteelemente handeln, mit denen das erste Teilschalenelement und das zweite Teilschalenelement verklemmt werden.

Wenigstens eines der Halteelemente kann als Klemmelement ausgebildet sein, um das erste Teilschalenelement und das zweite Teilschalenelement über eine Klemmwirkung zu verbinden. Dadurch ist der mechanische Aufbau der Halteelemente besonders einfach. Beispielsweise kann wenigstens eines der Halteelemente mit einem Gewinde und Muttern ausgebildet sein, um die Klemmwirkung zu erzielen.

Das erste Teilschalenelement, das zweite Teilschalenelement und/oder die benachbarten Enden der zwei Kabelkanalabschnitte können wenigstens ein Dichtband umfassen, um einen Innenraum der zwei Kabelkanalabschnitte gegenüber einer Umgebung abzudichten. Dadurch wird bei einem Brand die Zufuhr von zusätzlichem Sauerstoff aus der Umgebung verhindert. Zusätzlich kann damit das Eindringen von Feuchtigkeit in die zwei Kabelkanalabschnitte verhindert werden. Das Dichtband kann eine flexible Schicht aus Gummi oder Schaum umfassen, um die Dichtwirkung zu unterstützen.

Die zwei Kabelkanalabschnitte können jeweils ein Blechformteil umfassen. Dadurch können sie besonders kostengünstig hergestellt werden. Beispielsweise können die zwei Kabelkanalabschnitte jeweils ein U-förmiges Bodenteil und einen damit verbindbaren Deckel umfassen. Der Deckel kann über eine Schraub-, Klemm- oder Schnappverbindung mit dem U-förmigen Bodenteil verbindbar sein.

Die zwei Kabelkanalabschnitte können jeweils stirnseitig an den benachbarten Enden eine Aufsteckleiste umfassen. Dadurch kann die Elektrokabelinstallation vor Beschädigungen und/oder eine Person vor Verletzungen geschützt werden.

Die benachbarten Enden der zwei Kabelkanalabschnitte können Stützelemente umfassen, um eine Klemmwirkung des ersten Teilschalenelements und/oder des zweiten Teilschalenelements abzustützen. Dadurch kann bei einer breiten Ausführung der zwei Kabelkanalabschnitte ein Durchbiegen verhindert werden. Die Stützelemente können beispielsweise als Blechbiegeteile ausgeführt sein, die an ihren Enden abgewinkelt sind und dort mit den zwei Kabelkanalabschnitten verbunden sind. Dadurch können die Stützelemente besonders einfach ausgebildet werden. Denkbar ist jedoch auch, dass die Stützelemente aus Kunststoff bestehen. Die Stützelemente können jeweils wenigstens einseitig mit einem der zwei Kabelkanalabschnitte fest verbunden sein, insbesondere durch eine Verklebungs- oder Schweißstelle. Die Stützelemente können insbesondere als Stützbleche ausgebildet sein, wobei die Enden abgewinkelt sind. Vorzugsweise können die Stützelemente bei einer Breite der zwei Kabelkanalabschnitte Abschnitte von wenigstens 260 mm eingesetzt werden.

Darüber hinaus stellt Erfindung zur Lösung der oben genannten Aufgabenstellung einen Verbinder für einander benachbarte Enden von zwei Kabelkanalabschnitten des Installationskanalsystems bereit.

Dadurch, dass das erste Teilschalenelement und das zweite Teilschalenelement mit den seitlich abstehenden Flanschen aufeinandergelegt und in der Verbindungsposition mit den durch die Durchgangslöcher verlaufenden Halteelementen miteinander verbindbar sind, ist die Verbindung besonders einfach ausgeführt und kann so einfacher hergestellt werden. Zudem können die Halteelemente besonders kostengünstig mit einem oder mehreren Standardbauteilen ausgeführt werden, wie beispielsweise Schrauben, Muttern und dergleichen. Dadurch, dass die Durchgangslöcher des ersten Teilschalenelements als U-förmige Aussparungen ausgebildet sind, die in einer Querrichtung des ersten Teilschalenelements offen ausgebildet sind, sodass das erste Teilschalenelement bei aufeinandergelegten Flanschen entlang der Querrichtung zu der Verbindungsposition hin schiebbar ist, kann das erste Teilschalenelement mit dem zweiten Teilschalenelement zusammengebracht werden, während die Halteelemente bereits in die Durchgangslöcher des zweiten Teilschalenelements eingesetzt sind. Dadurch wird der Installationsvorgang des Verbinders vereinfacht.

Weitere Merkmale und Vorteile der Erfindung werden nachfolgend anhand der in den Figuren dargestellten Ausführungsbeispiele näher erläutert. Dabei zeigt:
- Figuren 1A - 1B: ein Ausführungsbeispiel eines Installationskanalsystems zum Brandschutz einer Elektrokabelinstallation in einer perspektivischen Ansicht;
- Figur 2: ein Ausführungsbeispiel des Verbinders für einander benachbarte Enden der zwei Kabelkanalabschnitte des Installationskanalsystems aus den Figuren 1A - 1B in einer Draufsicht;
- Figuren 3A - 3B: der eine Verbinder aus den Figuren 1A - 1B in einer Schnittansicht und in einer Detailansicht;
- Figuren 4A - 4C: der andere Verbinder aus den Figuren 1A - 1B in einer Schnittansicht und in zwei Detailansichten;
- Figuren 5A - 5B: die Verbinder aus den Figuren 3A - 3B bzw. 4A - 4C in einer perspektivischen Ansicht; und
- Figuren 5C - 5D: weitere Ausführungsbeispiele von Verbindern für einander benachbarte Enden der zwei Kabelkanalabschnitte des Installationskanalsystems aus den Figuren 1A - 1B in perspektivischen Ansichten.

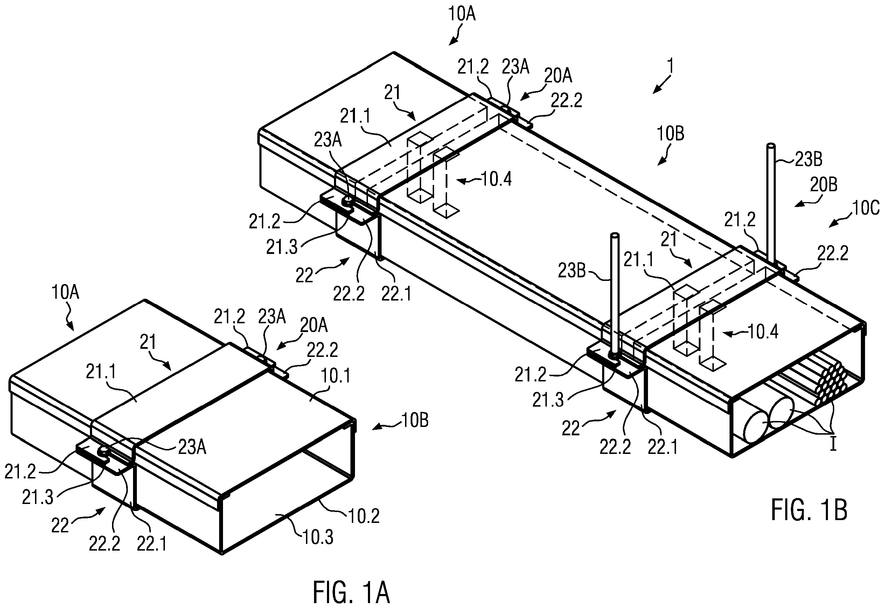

In den Figuren 1A - 1B ist ein Ausführungsbeispiel eines Installationskanalsystems zum Brandschutz einer Elektrokabelinstallation I in einer perspektivischen Ansicht dargestellt. Zu sehen sind in der Figur 1A zwei Kabelkanalabschnitte 10A und 10B, die jeweils ein U-förmiges Bodenteil 10.2 und einen damit verwendbaren Deckel 10.1 umfassen und die als Blechformteile ausgebildet sind. Auf der Innenseite sind sie mit dem aufschäumbaren Dämmschichtbildner 10.3 beschichtet, der bei einer bestimmten Temperatur aufschäumt und dadurch vorhandene Anschlussstellen bzw. -fugen und durch einen Brand entstehende Ritzen und Spalten abdichtet. Dabei erfolgt eine Wärmeisolation der Elektrokabelinstallation I und die Sauerstoffzufuhr zum Brand hin wird gestoppt. Dadurch kann verhindert werden, dass sich der Brand über das Installationskanalsystem hinweg ausbreitet. Der Deckel 10.1 rastet über einen Schnappmechanismus (hier nicht dargestellt) in das U-förmige Bodenteil 10.2 ein.

Des Weiteren ist der Verbinder 20A für die einander benachbarten Enden der zwei Kabelkanalabschnitte 10A und 10B zu sehen. Der Verbinder 20A umfasst das erste Teilschalenelement 21 und das zweite Teilschalenelement 22 mit den seitlich abstehenden Flanschen 21.2 bzw. 22.2, die aufeinandergelegt mittels der durch die Durchgangslöcher 21.3, 22.3 verlaufenden Halteelemente 23A in der Verbindungsposition miteinander verbunden werden können.

Des Weiteren ist in der Figur 1B ein dritter Kabelkanalabschnitte 10C zu sehen, der gleichermaßen ausgeführt ist, wie die zwei Kabelkanalabschnitte 10A, 10B. Der Kabelkanalabschnitt 10C ist über einen weiteren Verbinder 20B mit dem Kabelkanalabschnitt 10B verbunden.

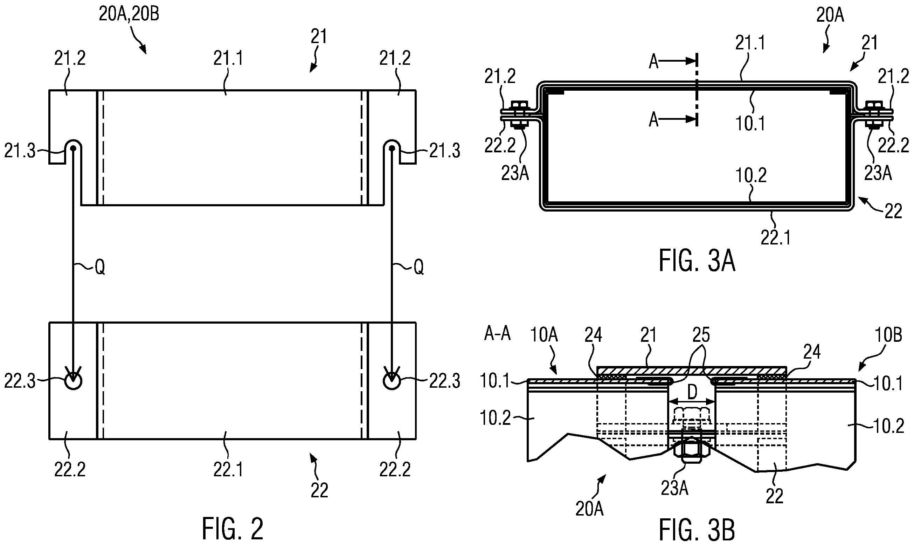

Das erste Teilschalenelement 21 und das zweite Teilschalenelement der Verbinder 20A, 20B werden weiter unten anhand der Figur 2 näher erläutert.

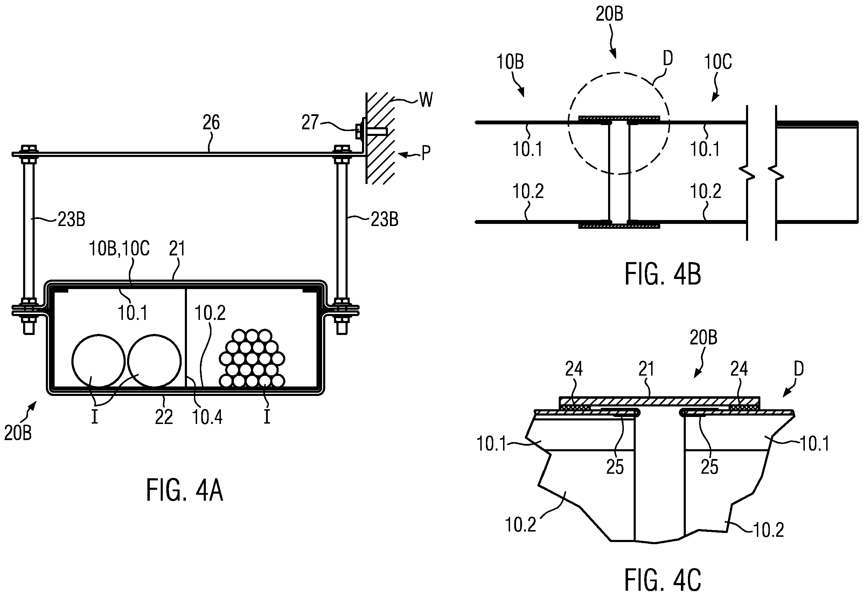

Der Verbinder 20B unterscheidet sich von dem Verbinder 20A lediglich durch die Ausführungsform der durch die Durchgangslöcher 21.3, 22.3 verlaufenden Halteelemente 23B: Bei dem Verbinder 20A sind die Halteelemente 23A als Schrauben mit Muttern ausgeführt, die das erste Teilschalenelement und das zweite Teilschalenelement 21 bzw. 22 über eine Klemmwirkung verbinden. Dies wird weiter unten anhand der Figuren 3A - 3B näher erläutert. Demgegenüber sind bei dem anderen Verbinder 20B die Halteelemente 23B als Gewindestangen ausgeführt und dienen zur Befestigung der Kabelkanalabschnitte 10B, 10C an Befestigungspunkten. Dies wird weiter unten anhand der Figuren 4A - 4C näher erläutert.

In der Figur 2 ist ein Ausführungsbeispiel des Verbinder 20A für einander benachbarte Enden der zwei Kabelkanalabschnitte 10A, 10B des Installationskanalsystems 1 aus den Figuren 1A - 1B in einer Draufsicht dargestellt. Das Ausführungsbeispiel gilt gleichermaßen für den anderen Verbinder 20B der Figuren 1A - 1B.

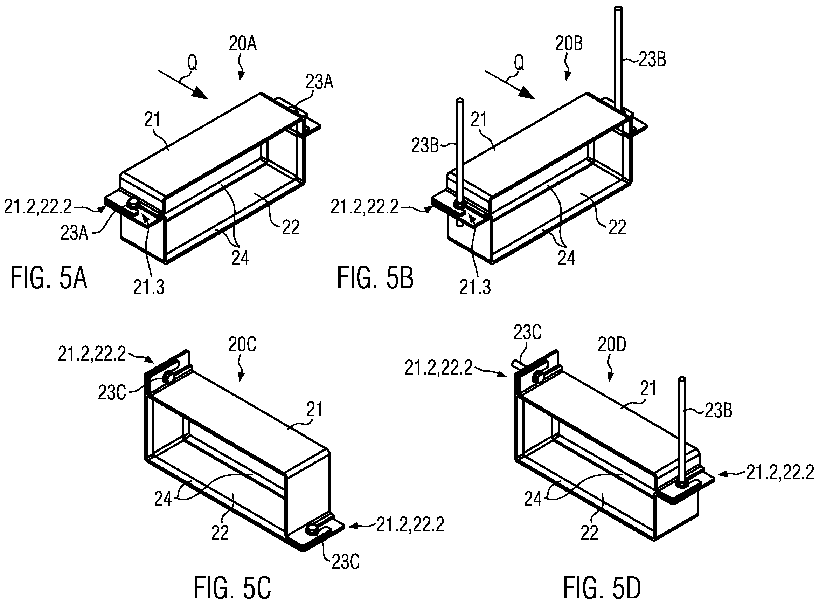

Zu sehen sind das erste Teilschalenelement 21 und das zweite Teilschalenelement 22, die als Blechbiegeteile ausgebildet sind und ein Hut-Profil aufweisen (siehe Fig. 3A, 5A und 5B). Entsprechend besteht das erste Teilschalenelement 21 aus dem abgekanteten Blech 21.1, das an beiden Enden jeweils zweifach in entgegengesetzten Richtungen umgebogen ist, wodurch die beiden Flansche 21.2 ausgebildet werden. Entsprechend ist auch das zweite Teilschalenelement 22 als abgekantetes Blech 22.1 an den Enden jeweils zweifach in entgegengesetzten Richtungen umgebogen und bildet dort die Flansche 22.2.

Zur Verbindung weist das zweite Teilschalenelement 22 zwei Durchgangslöcher 22.3 auf, die hier als Durchgangsbohrungen mit einem kreisrunden Querschnitt ausgeführt sind.

Demgegenüber sind die Durchgangslöcher 21.3 des ersten Teilschalenelements 21 als U-förmige Aussparungen ausgebildet, die in der Querrichtung Q des ersten Teilschalenelements offen ausgebildet sind.

Dadurch können beim Verbinder 20A die als Schrauben ausgeführten Halteelemente 23A bereits eingesetzt werden und dann das erste Teilschalenelement 21 bei aufeinandergelegten Flanschen 21.2, 22.2 entlang der Querrichtung Q zu einer Verbindungsposition hin geschoben werden.

Ebenso kann das zweite Teilschalenelement 22 mit den als Gewindestangen ausgeführten Halteelementen 23B versehen und an einer Wand, einer Decke und/oder einem Boden eines Gebäudes befestigt werden, so dass während eines Installationsvorgangs die zwei Kabelkanalabschnitte 10B, 10C darin eingelegt werden können. Anschließend kann das erste Teilschalenelement 21 bei aufeinandergelegten Flanschen 21.2, 22.2 entlang der Querrichtung Q zu einer Verbindungsposition hin geschoben werden, ohne dass die Halteelemente 23B vom zweiten Teilschalenelement 22 entfernt werden müssen.

Dadurch ist es besonders einfach, die Verbinder 20A, 20B an dem Installationskanalsystem 1 anzubringen. Dies ist vorteilhaft mit zwei Händen ohne weiteres möglich, da die Halteelemente beim 23 A, 23 B beim Installationsvorgang eingesetzt bleiben können während das erste Teilschalenelement 21 mit dem zweiten Teilschalenelement 22 verbunden wird.

In den Figuren 3A - 3B ist der Verbinder 20A aus den Figuren 1A - 1B in einer Schnittansicht und in einer Detailansicht A-A genauer dargestellt. Zu sehen ist, dass das erste Teilschalenelement 21 und das zweite Teilschalenelement 22 die benachbarten Enden der zwei Kabelkanalabschnitte 10A, 10B gemeinsam umschließen, sodass eine abgedichtete Verbindung entsteht. Wie bereits in Bezug auf die Figur 2 beschrieben, sind die beiden Teilschalenelement 21, 22 als Hut-Profil ausgebildet und im verbundenen Zustand liegen die Flansche 21.2, 22.2 aufeinander auf und sind über die als Schrauben ausgebildeten Halteelemente 23A miteinander verbunden.

Im Detail A-A ist zu sehen, dass die benachbarten Enden der zwei Kabelkanalabschnitte 10A, 10B nicht direkt aneinander anstoßen, sondern einen Abstand D zueinander aufweisen. Um den Innenraum abzudichten sind das erste Teilschalenelement 21 und das zweite Teilschalenelement 22 mit den Dichtbändern 24 versehen, so dass die Außenseiten der zwei Kabelkanalabschnitte 10A, 10B gegenüber der Innenseite des Verbinders 20A abgedichtet sind. Dadurch wird der Innenraum der zwei Kabelkanalabschnitte 10A, 10B gegenüber der Umgebung abgedichtet, sodass bei einem Brand einerseits keine Sauerstoffzufuhr erfolgt und im normalen Betrieb keine Feuchtigkeit eindringen kann.

Des Weiteren ist zu sehen, dass die zwei Kabelkanalabschnitte 10A, 10B jeweils stirnseitig an den benachbarten Enden die Aufsteckleiste 25 umfassen. Dadurch werden Verletzungen der Elektrokabelinstallation I bzw. von Personen beim Installationsvorgang verhindert.

In den Figuren 4A - 4C ist der andere Verbinder 20B aus den Figuren 1A - 1B in einer Schnittansicht und in zwei Detailansichten dargestellt. Wie bereits zuvor erwähnt, unterscheidet sich der Verbinder 20B von dem Verbinder 20A lediglich durch die Ausführung der Halteelemente 23B, die hier als Gewindestangen ausgeführt sind. Wie in der Figur 4A zu sehen ist, kann dadurch der Verbinder 20B zur Befestigung an dem Befestigungspunkt P eingesetzt werden, so dass er für die zwei Kabelkanalabschnitte 10B, 10C nach der Verbindung des ersten Teilschalenelements 21 mit dem zweiten Teilschalenelement 22 eine Halterung bildet.

Dazu umfasst das Installationskanalsystem I den Träger 26 zur Befestigung an dem Befestigungspunkt P, beispielsweise an einer Wand eines Gebäudes. Zu sehen ist auch, dass der Träger 26 winkelartig mit zwei Schenkeln ausgebildet ist. Der eine Schenkel weist Durchgangsbohrungen auf, in die die Halteelemente 23B eingesetzt und über Muttern verschraubt werden können. Dazu sind die Halteelemente 23B als Gewindestangen ausgebildet, die auf Bedarf vor Ort an die Installationshöhe der beiden Kabelkanalabschnitte 10B, 10C angepasst werden können.

Der andere Schenkel des Trägers 26 ist mit einer weiteren Durchgangsbohrung versehen, so dass er mittels der Schraube 27 an dem Befestigungspunkt P, beispielsweise mittels eines Dübels befestigt werden kann.

In den Figuren 4B, 4C sind Detailansichten im Bereich des Verbinders 20B zu sehen. Auch hier sind das erste Teilschalenelement 21 und das nicht weiter dargestellte zweite Teilschalenelement 22 mit Dichtbändern 24 versehen, um den Innenraum der zwei Kabelkanalabschnitte 10B, 10C gegenüber der Umgebung abzudichten. Bezüglich der Dichtbänder 24 entspricht also der Verbinder 20B dem Verbinder 20A aus den Figuren 3A - 3B.

Zudem sind auch hier die zwei Kabelkanalabschnitte 10B, 10C stirnseitig an den benachbarten Enden mit den Aufsteckleisten 25 versehen.

In den Figuren 5A - 5B sind die Verbinder 20A, 20B aus den Figuren 3A - 3B bzw. 4A - 4C in einer perspektivischen Ansicht dargestellt. Zu sehen sind hier die Verbinder 20A, 20B ohne die 2 Kabelkanalabschnitte.

Wie bereits in Bezug auf die Figur 2 ausgeführt, sind hier die beiden Teilschalenelement 21, 22 als Hut-Profile ausgebildet. Zu sehen ist auch, dass die Durchgangslöcher 21.3 des ersten Teilschalenelements 21 als U-förmige Aussparungen ausgebildet sind, die in der Querrichtung Q des ersten Teilschalenelements 21 offen ausgebildet sind. Dadurch kann das erste Teilschalenelement 21 bei aufeinandergelegten Flanschen 21.2, 22.2 entlang der Querrichtung Q zu der dargestellten Verbindungsposition hin eingeschoben werden.

Gut zu erkennen sind auch die Dichtbänder 24 auf der Innenseite der beiden Teilschalenelemente 21, 22.

In den Figuren 5C - 5D sind weitere Ausführungsbeispiele von Verbindern 20C, 20D für einander benachbarte Enden der zwei Kabelkanalabschnitte 10A - 10C des Installationskanalsystems 1 aus den Figuren 1A - 1B in perspektivischen Ansichten dargestellt.

Sie unterscheiden sich von den Ausführungsbeispielen in den Figuren 5A - 5 B lediglich durch die Formgebung des ersten Teilschalenelements 21 und des zweiten Teilschalenelements 22:
In der Figur 5C ist das erste Teilschalenelement 21 als Winkelprofil mit abgekanteten Flanschen 21.2 ausgeführt. Dazu korrespondierend ist das zweite Teilschalenelement 22 als Winkelprofil ausgebildet, das ohne Abkantungen auskommt und gerade in die Flansche 22.2 übergeht.

Lediglich beispielhaft sind hier die beiden Haltelemente 23C als Schrauben ausgeführt, mit denen der Verbinder 20C an Befestigungspunkten in einer Raumecke befestigt werden kann. Ebenso ist denkbar, dass die Halteelemente 23C ohne Befestigung auskommen, oder dass andere Arten von Halteelementen eingesetzt werden.

In der Figur 5D ist der Verbinder 20D zur direkten Befestigung an der Wand mit dem Halteelement 23C und zur Befestigung an einer Decke über das Halteelement 23B ausgebildet:
Zu sehen ist, dass das erste Teilschalenelement 21 als Winkelprofil mit abgekanteten Flanschen 21.2 ausgebildet ist. Das zweite Teilschalenelement 22 ist als U-Profil ausgeführt und weist auf einer Seite einen gerade ausgeführten Flansch 22.2 auf, der ohne Abkantung auskommt, wohingegen der andere Flansch 22.2 abgekantet ausgeführt ist.

Insgesamt ist es bei allen Ausführungsbeispielen der Figuren 1A - 5D möglich, das zweite Teilschalenelement 22 unabhängig von der Verbindung mit dem ersten Teilschalenelements 21 über die Halteelemente 23B, 23C an wenigstens einem Befestigungspunkt P anzubringen. Dadurch können die zwei Kabelkanalabschnitte 10A, 10B zunächst in das zweite Teilschalenelement 22 eingelegt und gelagert werden. Anschließend kann die Elektrokabelinstallation I in die zwei bzw. drei Kabelkanalabschnitte 10A - 10C eingelegt werden, beispielsweise bei offenem Deckel. Anschließend kann der Deckel verschlossen und das erste Teilschalenelement 21 entlang der Querrichtung Q zu der Verbindungsposition hin geschoben werden und dann mit den Halteelementen 23A - 23C verklemmt werden, ohne, dass die Halteelemente 23A - 23C vom zweiten Teilschalenelement 22 wieder gelöst werden.

Zu sehen ist in den Figuren 1B und 4A, dass die zwei Kabelkanalabschnitte 10A - 10C die Stützelemente 10.4 umfassen, um eine Klemmwirkung des ersten Teilschalenelements 21 und des zweiten Teilschalenelements 22 abzustützen. Dies verhindert besonders bei breit ausgeführten Kabelkanalabschnitte 10A - 10C eine Wölbung der Kanalwände, insbesondere, wenn sie eine Breite von wenigstens 260mm aufweisen.

## Patentansprüche

1. Verbinder (20A - 20D) für einander benachbarte Enden von zwei Kabelkanalabschnitten (10A - 10C) eines Installationskanalsystems (1), die jeweils innenseitig mit einem aufschäumbaren Dämmschichtbildner (10.3) beschichtet sind, umfassend ein erstes Teilschalenelement (21), ein zweites Teilschalenelement (22), und Halteelemente (23A-23C), wobei das erste Teilschalenelement (21) und das zweite Teilschalenelement (22) mit seitlich abstehenden Flanschen (21.2, 22.2) aufeinandergelegt und mittels der durch in den Flanschen (21.2, 22.2) ausgebildeten Durchgangslöcher (21.3, 22.3) verlaufenden Halteelementen (23A - 23C) in einer Verbindungsposition miteinander verbindbar sind, und wobei die Durchgangslöcher (21.3) des ersten Teilschalenelements (21) als U-förmige Aussparungen ausgebildet sind, die in einer Querrichtung (Q) des ersten Teilschalenelements (21) offen ausgebildet sind, so dass das erste Teilschalenelement (21) bei aufeinandergelegten Flanschen (21.2, 22.2) entlang der Querrichtung (Q) zu der Verbindungsposition hin schiebbar ist, und wobei der Verbinder (20A - 20D) zur Befestigung an wenigstens einem Befestigungspunkt (P) ausgebildet ist, um für die zwei Kabelkanalabschnitte (10A - 10C) nach der Verbindung des ersten Teilschalenelements (21) mit dem zweiten Teilschalenelement (22) eine Halterung zu bilden, wobei die durch die Durchgangslöcher (22.3) des zweiten Teilschalenelements (22) verlaufenden Halteelemente (23B, 23C) zur Befestigung an dem wenigstens einen Befestigungspunkt (P) ausgebildet sind, und wobei das erste Teilschalenelement (21) und/oder das zweite Teilschalenelement (22) mit einem aufschäumbaren Dämmschichtbildner beschichtet sind.

2. Installationskanalsystem (1) zum Brandschutz einer Elektrokabelinstallation (I), mit
- zwei Kabelkanalabschnitten (10A - 10C), die jeweils innenseitig mit einem aufschäumbaren Dämmschichtbildner (10.3) beschichtet sind, und
- mit einem Verbinder (20A - 20D) für einander benachbarte Enden der zwei Kabelkanalabschnitte (10A - 10C) nach Anspruch 1.

3. Installationskanalsystem (1) nach Anspruch 2, wobei der Verbinder (20A - 20D) dazu ausgebildet ist, eine Halterung an einer Wand, einer Decke, einem bereits vorhandenen Tragsystem und/oder einem Boden eines Gebäudes zu bilden.

4. Installationskanalsystem (1) nach Anspruch 2 oder 3, wobei das zweite Teilschalenelement (22) unabhängig von der Verbindung mit dem ersten Teilschalenelement (21) über die Halteelemente (23B, 23C) an dem wenigstens einen Befestigungspunkt (P) anbringbar ist, um bei einem Installationsvorgang eine Lagerung für die einander benachbarten Enden der zwei Kabelkanalabschnitte (10A - 10C) zu bilden.

5. Installationskanalsystem (1) nach einem der vorherigen Ansprüche 2 bis 4, wobei die Halteelemente (23C) zur direkten Befestigung an dem wenigstens einen Befestigungspunkt (P) ausgebildet sind.

6. Installationskanalsystem (1) nach einem der vorherigen Ansprüche 2 bis 5, wobei das Installationskanalsystem (I) einen Träger (26) zur Befestigung an dem wenigstens einen Befestigungspunkt (P) umfasst, und wobei die Halteelemente (23B) direkt mit dem Träger (26) verbindbar sind.

7. Installationskanalsystem (1) nach einem der vorangegangenen Ansprüche 2 bis 6, wobei das erste Teilschalenelement (21) und/oder das zweite Teilschalenelement (22) als Blechbiegeteile ausgebildet sind.

8. Installationskanalsystem (1) nach einem der vorangegangenen Ansprüche 2 bis 7, wobei die Halteelemente (23A - 23C) jeweils eine Stange, einen Bolzen, eine Gewindestange, eine Mutter und/oder eine Schraube umfassen.

9. Installationskanalsystem (1) nach einem der vorangegangenen Ansprüche 2 bis 8, wobei wenigstens eines der Halteelemente (23A - 23C) als Klemmelement ausgebildet ist, um das erste Teilschalenelement (21) und das zweite Teilschalenelement (22) über eine Klemmwirkung zu verbinden.

10. Installationskanalsystem (1) nach einem der vorangegangenen Ansprüche 2 bis 9, wobei das erste Teilschalenelement (21), das zweite Teilschalenelement (22) und/oder die benachbarten Enden der zwei Kabelkanalabschnitte (10A - 10C) wenigstens ein Dichtband (24) umfassen, um einen Innenraum der zwei Kabelkanalabschnitte (10A - 10C) gegenüber einer Umgebung abzudichten.

11. Installationskanalsystem (1) nach einem der vorangegangenen Ansprüche 2 bis 10, wobei die zwei Kabelkanalabschnitte (10A - 10C) jeweils ein Blechformteil umfassen.

12. Installationskanalsystem (1) nach einem der vorangegangenen Ansprüche 2 bis 11, wobei die zwei Kabelkanalabschnitte (10A - 10C) jeweils stirnseitig an den benachbarten Enden eine Aufsteckleiste (25) umfassen.

13. Installationskanalsystem (1) nach einem der vorangegangenen Ansprüche 2 bis 12, wobei die benachbarten Enden der zwei Kabelkanalabschnitte (10A - 10C) Stützelemente (10.4) umfassen, um eine Klemmwirkung des ersten Teilschalenelements (21) und/oder des zweiten Teilschalenelements (22) abzustützen.

## Claims

1. Connector (20A - 20D) for contiguous ends of two cable channel sections (10A - 10C) of an installation channel system (1) each having a coating of an expandable insulation layer forming material (10.3) on the inside, comprising a first split shell member (21), a second split shell member (22) and holding members (23A-23C), wherein the first split shell member (21) and the second split shell member (22) are abutted at laterally protruding flanges (22.1, 22.2) and can be connected in a connecting position by means of the holding members (23A-23C) penetrating through holes (21.3, 22.3) formed in the flanges (21.2, 22.2), and wherein the through holes (21.3) of the first split shell member (21) are formed as U-shaped recesses opening in a transverse direction (Q) of the first split shell member (21) such that the first split shell member (21) can be slid towards the connection position along the transverse direction (Q) when the flanges (21.2, 22.2) abut against each other, and wherein the connector (20A - 20D) is configured for attachment to at least one attachment location (P) for forming a support for the two cable channel sections (10A - 10C) after connecting the first split shell member (21) to the second split shell member (22), wherein the holding members (23B, 23C) penetrating the through holes (22.3) of the second split shell member (22) are configured for attachment to the at least one attachment location (P) and wherein the first split shell member (21) and/or the second split shell member (22) are coated with an expandable insulation layer forming material.

2. Installation channel system (1) for fire prevention in an electric cable insulation (I), including
- two cable channel sections (10A - 10C) each having a coating of an expandable insulation layer forming material (10.3) on the inside, and
- a connector (20A - 20D) for contiguous ends of the two cable channel sections (10A - 10C) according to claim 1.

3. Installation channel system (1) according to claim 2, wherein the connector (20A - 20D) is configured to provide a support on a wall, a sealing, an existing support system and/or a floor of the building.

4. Installation channel system (1) according to claims 2 or 3, wherein the second split shell member (22) may be mounted to the at least one attachment location (P) independently of the connection of the first split shell member (21) via the holding members (23B, 23C) to serve as a bearing for the contiguous ends of the two cable channel sections (10A - 10C).

5. Installation channel system (1) according to anyone of the preceding claims 2 to 4, wherein the holding members (23C) are configured for direct attachment to the at least one attachment location (P).

6. Installation channel system (1) according to anyone of the preceding claims 2 to 5, wherein the insulation channel system (1) comprises a bracket (26) for attachment to the at least one attachment location (P) and wherein the holding members (23B) can be directly connected to the bracket (26).

7. Installation channel system (1) according to anyone of the preceding claims 2 to 6, wherein the first split shell member (21) and/or the second split shell member (22) are formed as bent metal sheet parts.

8. Installation channel system (1) according to anyone of the preceding claims 2 to 7, wherein the holding members (23A - 23C) each comprise a bar, a bolt, a threaded rod, a nut and/or a screw.

9. Installation channel system (1) according to anyone of the preceding claims 2 to 8, wherein at least one of the holding members (23A - 23C) is configured as a clamping member for connecting the first split shell member (21) and the second split shell member (22) by means of a clamping action.

10. Installation channel system (1) according to anyone of the preceding claims 2 to 9, wherein the first split shell member (21), the second split shell member (22) and/or the contiguous ends of the two cable channel sections (10A - 10C) comprise at least one sealing tape (24) for sealing an inside of the two cable channel sections (10A - 10C) against an environment.

11. Installation channel system (1) according to anyone of the preceding claims 2 to 10, wherein the two cable channel sections (10A - 10C) each comprise a formed sheet metal part.

12. Installation channel system (1) according to anyone of the preceding claims 2 to 11, wherein the two cable channel sections (10A - 10C) each comprise a clip-on strip (25) on the end faces of their contiguous ends.

13. Installation channel system (1) according to anyone of the preceding claims 2 to 12, wherein the contiguous ends of the two cable channel sections (10A - 10C) comprise supporting members (10.4) for supporting a clamping action of the first split shell member (21) and/or the second split shell member (22).

## Revendications

1. Connecteur (20A à 20D) pour des extrémités adjacentes de deux sections de chemin de câble (10A à 10C) d'un système de canal d'installation (1), qui sont respectivement revêtues sur leur côté intérieur d'un agent de formation de couche isolante (10.3) pouvant être expansé, comprenant un premier sous-élément de coque (21), un second sous-élément de coque (22) et des éléments de retenue (23A à 23C), dans lequel le premier sous-élément de coque (21) et le second sous-élément de coque (22) sont superposés avec des brides (21.2, 22.2) faisant saillie latéralement et peuvent être reliés l'un à l'autre dans une position de connexion au moyen des éléments de retenue (23A à 23C) s'étendant à travers des trous traversants (21.3, 22.3) formés dans les brides (21.2, 22.2), et dans lequel les trous traversants (21.3) du premier sous-élément de coque (21) sont réalisés sous la forme d'évidements en forme de U qui sont ouverts dans une direction transversale (Q) du premier sous-élément de coque (21), de sorte que le premier sous-élément de coque (21) peut être déplacé le long de la direction transversale (Q) vers la position de connexion lorsque les brides (21.2, 22.2) sont superposées, et dans lequel le connecteur (20A à 20D) est conçu pour être fixé au niveau d'au moins un point de fixation (P) afin de former un support pour les deux sections de chemin de câble (10A à 10C) après la connexion du premier sous-élément de coque (21) avec le second sous-élément de coque partiel (22), dans lequel les éléments de retenue (23B, 23C) s'étendant à travers les trous traversants (22.3) du second sous-élément de coque (22) sont conçus pour être fixés au niveau du au moins un point de fixation (P), et dans lequel le premier sous-élément de coque (21) et/ou le second sous-élément de coque (22) sont revêtus d'un agent de formation de couche isolante pouvant être expansé.

2. Système de canal d'installation (1) pour la protection contre l'incendie d'une installation de câbles électriques (I), comprenant
- deux sections de chemin de câble (10A à 10C) respectivement recouvertes sur leur côté intérieur d'un agent de formation de couche isolante (10.3) pouvant être expansé, et
- un connecteur (20A à 20D) pour des extrémités adjacentes des deux sections de chemin de câble (10A à 10C) selon la revendication 1.

3. Système de canal d'installation (1) selon la revendication 2, dans lequel le connecteur (20A à 20D) est conçu pour former un support sur un mur, un plafond, un système de support déjà existant et/ou un sol d'un bâtiment.

4. Système de canal d'installation (1) selon la revendication 2 ou 3, dans lequel le second sous-élément de coque (22) peut, indépendamment de la connexion avec le premier sous-élément de coque (21), être mis en place au niveau du au moins un point de fixation (P) par l'intermédiaire des éléments de retenue (23B, 23C) afin de former un logement pour les extrémités adjacentes des deux sections de chemin de câble (10A à 10C) lors d'une procédure d'installation.

5. Système de canal d'installation (1) selon l'une quelconque des revendications précédentes 2 à 4, dans lequel les éléments de retenue (23C) sont conçus pour une fixation directe au niveau du au moins un point de fixation (P).

6. Système de canal d'installation (1) selon l'une quelconque des revendications précédentes 2 à 5, dans lequel le système de canal d'installation (I) comprend un support (26) permettant la fixation au niveau du au moins un point de fixation (P), et dans lequel les éléments de retenue (23B) peuvent être reliés directement au support (26).

7. Système de canal d'installation (1) selon l'une quelconque des revendications précédentes 2 à 6, dans lequel le premier sous-élément de coque (21) et/ou le second sous-élément de coque (22) sont réalisés sous la forme de pièces pliées en tôle.

8. Système de canal d'installation (1) selon l'une quelconque des revendications précédentes 2 à 7, dans lequel les éléments de retenue (23A à 23C) comprennent respectivement une tige, un boulon, une tige filetée, un écrou et/ou une vis.

9. Système de canal d'installation (1) selon l'une quelconque des revendications précédentes 2 à 8, dans lequel au moins un des éléments de retenue (23A à 23C) est réalisé sous la forme d'un élément de serrage afin de relier le premier sous-élément de coque (21) et le second sous-élément de coque (22) par un effet de serrage.

10. Système de canal d'installation (1) selon l'une quelconque des revendications précédentes 2 à 9, dans lequel le premier sous-élément de coque (21), le second sous-élément de coque (22) et/ou les extrémités adjacentes des deux sections de chemin de câble (10A à 10C) comprennent au moins une bande d'étanchéité (24) afin de rendre un espace intérieur des deux sections de chemin de câble (10A à 10C) étanche par rapport à un environnement.

11. Système de canal d'installation (1) selon l'une quelconque des revendications précédentes 2 à 10, dans lequel les deux sections de chemin de câble (10A à 10C) comprennent respectivement une pièce moulée en tôle.

12. Système de canal d'installation (1) selon l'une quelconque des revendications précédentes 2 à 11, dans lequel les deux sections de chemin de câble (10A à 10C) comprennent respectivement une barrette enfichable (25) située sur le côté avant au niveau des extrémités adjacentes.

13. Système de canal d'installation (1) selon l'une quelconque des revendications précédentes 2 à 12, dans lequel les extrémités adjacentes des deux sections de chemin de câble (10A à 10C) comprennent des éléments de soutien (10.4) afin de supporter un effet de serrage du premier sous-élément de coque (21) et/ou du second sous-élément de coque (22).
